# FASCICULE DE BREVET EUROPEEN

(11) **EP 0 575 267 B1**
(45) Date de publication et mention de la délivrance du brevet: **24.01.1996**
(21) Numéro de dépôt: 93420245.8
(22) Date de dépôt: 14.06.1993
(51) Int. Cl.: B65B 7/28

(54) **Procédé de fermeture étanche d'un récipient non métallique avec un couvercle non métallique pelable et réutilisable**
Verfahren zum wasserdichten Verschliessen eines nicht-metallischen Behälters mittels eines nicht-metallischen abziehbaren und wiederverwendbaren Deckels
Method for the liquid-tight sealing of a non-metallic container with a non-metallic peelable and reusable cover

(30) Priorité: 16.06.1992 FR 9207541
(43) Date de publication de la demande: 22.12.1993
(73) Titulaire: PECHINEY EMBALLAGE ALIMENTAIRE, F-92115 Clichy (FR)
(72) Inventeur: Rea, Jean, F-69230 St Genis Laval (FR); Philippe, Michel, F-38200 Vienne (FR); Lashermes, Michel, F-69440 Mornant (FR)
(74) Mandataire: Séraphin, Léon

(56) Documents cités:
- DE-A- 1 904 088
- DE-A- 3 447 771
- US-A- 3 396 899
- US-A- 3 434 651

## Description

### DOMAINE DE L'INVENTION

L'invention appartient au domaine des emballages non métalliques et concerne un procédé de fermeture étanche d'un récipient avec un couvercle pelable.

Un récipient est muni d'un couvercle pelable lorsque le couvercle peut être séparé du récipient, en totalité ou en partie, sans l'aide d'instruments d'appoint, c'est à dire en exerçant simplement une traction manuelle sur le couvercle.

Par fermeture étanche, on entend une fermeture empêchant le contenu de se répandre à l'extérieur du récipient et l'entrée de micro-organismes (bactéries, moisissures...) pouvant altérer le contenu, notamment durant la plus ou moins longue phase de stockage précédant la première utilisation. De manière générale, la zone de contact du couvercle et du récipient, ou zone de fermeture, présente sensiblement les mêmes propriétés barrière que les matériaux propres du couvercle ou du récipient.

Plus particulièrement, l'invention concerne la fermeture d'un récipient dont le contenu ne sera pas utilisé en une seule fois, de sorte que le couvercle pelable, après ouverture initiale, sera réutilisable comme couvercle autant de fois que nécessaire.

Que ce soit dans le domaine de la distribution des aliments ou encore la distribution de peinture, il y a un besoin d'emballages "multi-doses" refermables après l'ouverture initiale, par opposition aux emballages "mono-dose" dont le contenu est consommé en une seule fois dès la première ouverture.

Compte tenu de la taille des récipents et couvercles correspondants d'emballages "multi-doses", compte tenu de la nécessité de réutiliser plusieurs fois le même couvercle et en particulier d'exercer une traction sur le couvercle à plusieurs reprises, il est indispensable d'utiliser un couvercle ayant une tenue mécanique suffisante et par voie de conséquence, une épaisseur suffisante, sous peine de voir une détérioration du couvercle à plus ou moins brève échéance.
En pratique, le couvercle du domaine de l'invention est en matériau semi-rigide ou rigide, d'épaisseur au moins égale à 0,1 mm.

### ART ANTERIEUR

On connaît de nombreux emballages non métalliques du commerce avec couvercle réutilisable. Ils sont typiquement à base de matériaux plastiques ou de matériaux cellulosiques (carton).

Dans de nombreux exemples où le contenu est un aliment, on observe que la fermeture due au couvercle n'est pas étanche, soit parce que le contenu peut tolérer une absence d'étanchéité (cas du beurre par exemple), soit parce qu'il y a une double fermeture, non-étanche avec le couvercle réutilisable, étanche grâce à un opercule thermoscellé typiquement en Al.

On connaît aussi des emballages non métalliques à couvercle réutilisable dont l'étanchéité est obtenue grâce à un joint circulaire et/ou à la coopération de gorges du couvercle avec celles du bord du récipient. Dans ce cas, une étanchéité élevée entraîne généralement soit un surcoût soit une certaine difficulté pour ouvrir le couvercle.

### PROBLEME POSE

Répondant à la demande du marché, la demanderesse cherché à mettre au point des emballages ayant les caractéristiques ou satisfaisant aux contraintes suivantes :
- d'une part, ce sont des emballages non métalliques formés d'un corps non métallique et d'un couvercle non métallique, (typiquement mais non exclusivement en matière plastique), de manière à pouvoir être utilisés en particulier dans tous les types de fours à microondes,
- d'autre part, ce sont des emballages de grande dimension (diamètre de couvercle de 95 mm à titre d'exemple), donc multi-doses, à couvercle étanche refermable, de manière à ce que le contenu du récipient puisse éventuellement être consommé en plusieurs fois.
- en outre, l'emballage doit être à ouverture facile, grâce à un couvercle pelable.
- de plus, l'emballage doit être de préférence recyclable, c'est à dire être constitué d'un materiau réutilisable tel quel dans le procédé.
- enfin, il est nécessaire que la fermeture du corps par le couvercle puisse être réalisée à cadence élevée sur ligne de remplissage, le temps alloué à la fermeture proprement dite étant typiquement inférieur à 1 s.

Un autre objectif général de l'invention est de diminuer le coût global de l'emballage, et en particulier de supprimer l'emploi d'une double fermeture onéreuse (typiquement : opercule aluminium thermoscellé + couvercle réutilisable après la première ouverture).

Ces caractéristiques entraînent un certain nombre de contraintes. Ainsi, un couvercle qui doit servir plusieurs fois sans se détériorer doit présenter des caractéristiques mécaniques suffisantes, et notamment une certaine épaisseur. Par exemple, un couvercle plastique en PP réutilisable doit, de préférence, avoir une épaisseur au moins égale à 0,2 mm.

La demanderesse a essayé d'utiliser les techniques connues de fermeture, notamment le procédé de thermoscellage, pour sceller en un temps très court les deux couches plastiques relativement épaisses, correspondant l'une au bord du récipient à fermer et l'autre au couvercle de fermeture.

Par thermoscellage, elle n'a pu réussir à obtenir une fermeture satisfaisant à l'ensemble des contraintes d'un couvercle à la fois posable à cadence élevée / étanche / pelable / réutilisable.

En effet, elle s'est heurtée d'une part au problème de la diffusion de la chaleur compte tenu des temps de fermeture très courts sur ligne de conditionnement, et de l'épaisseur relativement élevée de la paroi du corps et du couvercle.
D'autre part, lorsqu'elle a tenté d'apporter au matériau une grande puissance calorifique, elle s'est heurtée au problème du fluage du matériau plastique et de l'amincissement notamment du couvercle dans la zone de thermoscellage, de sorte que le couvercle, après ouverture initiale, présentait des risques de rupture et n'était donc pas réutilisable pour la fermeture du corps.

En définitive, avec un couvercle PP d'épaisseur au moins égale à 0,2 mm, la demanderesse n'a pu obtenir une fermeture avec thermoscellage en moins de 1 s, le couvercle étant pelable et réutilisable plusieurs fois.

Le document DE-A-3 447 771 décrit un procédé de fermeture d'un récipient selon le préambule de la revendication 1. Ce document n'indique toutefois pas comment contrôler la qualité du scellage afin d'obtenir les caractéristiques désirées.

La demanderesse recherché d'autre moyens à mettre en oeuvre pour atteindre ses objectifs et satisfaire les caractéristiques et les contraintes mentionnées précédemment.

### DESCRIPTION DE L'INVENTION

Selon l'invention, le procédé de fermeture d'un récipient non métallique avec un couvercle non métallique, dans lequel on forme une surface de scellage étanche en comprimant, entre deux mors dont au moins un est muni d'un moyen de scellage comprenant un générateur d'ultrasons, le couvercle revêtu intérieurement d'une première matière organique polymérique, sur le bord du récipient revêtu intérieurement d'une seconde matière organique polymérique, est caractérisé en ce que
a) le scellage de ladite première et de ladite seconde matière organique est obtenu en contrôlant l'énergie dissipée sur la surface de scellage par apport d'une quantité d'énergie modulable et prédéterminée,
b) ledit apport d'énergie est proportionnel à l'aire de la surface de scellage, et compris entre 1 et 20 J/cm² de surface de scellage, de manière à obtenir un couvercle, pelable avec un effort d'ouverture reproductible et prédéterminé, et réutilisable.

### DESCRIPTION DES FIGURES

La figure 1 représente un diagramme portant en abscisse l'énergie dissipée pour sceller le récipient et le couvercle décrits dans l'exemple (apport d'énergie exprimé en J/cm² d'aire de scellage), et en ordonnée la force de pelage du couvercle exprimée en N. Ce diagramme montre qu'il existe une relation sensiblement linéaire entre apport d'énergie et force de pelage, du moins dans la plus grande partie du domaine considéré.
On a porté en abscisse également le temps, exprimé en seconde, durant lequel les ultrasons ont été appliqués.

La figure 2a représente, à l'échelle 1, une vue latérale du couvercle (1) en PP de l'exemple, tandis que la figure 2b est une vue de dessus à l'échelle 1, qui permet de voir la position de la languette (3).

La figure 3a représente, à l'échelle 1, le pot en PP de l'exemple, dont le bord (4) possède un jonc de scellage (5), comme cela est visible sur la figure 3b qui est un agrandissement du bord (4) de la figure 3a.

La figure 4 schématise le clipsage du couvercle (3) sur le bord (4) du récipient (2), ce qui permet de réutiliser le couvercle un grand nombre de fois, compte tenu de l'élasticité du couvercle en PP.

La figure 5 schématise une vue partielle, en coupe longitudinale, du dispositif de scellage permettant de comprimer le couvercle (1) sur le récipient (2) grâce à un mors inférieur annulaire (6) et à une tête (7) d'un générateur d'ultrasons (8) non représenté, tête jouant le rôle de mors supérieur.

### DESCRIPTION DETAILLEE DE L'INVENTION

Bien que l'utilisation des ultrasons soit déjà en elle-même connue pour souder ensemble des matériaux, les matières plastiques notamment, les recherches entreprises par la demanderesse dans le domaine du soudage par ultrasons ont montré :
a) qu'il était possible de contrôler avec précision l'énergie dissipée à la jonction des deux matériaux à souder,
b) que la solidité de la soudure, donc la force à exercer pour rompre cette soudure, était sensiblement proportionnelle à l'énergie dissipée.

La demanderesse a donc pensé à utiliser ces propriétés pour la fabrication de couvercles pelables réutilisables, les techniques traditionnelles, notamment de thermoscelage, n'étant pas dans ce cas utilisables comme mentionné précédemment.

D'une manière générale, l'apport d'énergie est fonction de l'aire de la surface de scellage (nous avons utilisé le mot scellage pour désigner la soudure des deux matériaux constituant les bords du récipient et du couvercle) et il est généralement compris entre 1 et 20 J/cm² de surface de scellage.

Avec des efforts d'ouvertures habituels, compris entre 10 et 40 N, il faut un apport d'énergie correspondant de préférence compris entre 5 et 15 J/cm².

Il est commode d'effectuer l'apport d'énergie à puissance constante et donc de contrôler l'apport d'énergie soit par le temps de fonctionnement efficace du générateur à ultrasons, soit de préférence par la quantité d'énergie dissipée, ceci grâce à un intégrateur d'énergie, de manière à arrêter le générateur à ultrasons dès qu'une quantité prédéterminée d'énergie à été dissipée à la surface de scellage.

On choisit une puissance telle que ce temps de fonctionnement soit typiquement inférieur à 0,1 seconde.

Pour pouvoir transmettre l'énergie des ultrasons aux matériaux à souder, il faut comprimer les matériaux. Pour sceller le couvercle et le récipient, on comprime donc le couvercle sur le bord du récipient en appliquant aux deux mors une force de compression prédéterminée comprise entre 20 et 500 N, et/ou en rapprochant les deux mors de manière à obtenir une distance entre mors prédéterminée, comprise entre 0,1 et 0,6 mm selon l'épaisseur du couvercle et du bord du récipient.

De préférence, on exerce entre les mors une force de compression prédéterminée comprise entre 40 et 250 N dans le cas d'un récipient dont le bord à sceller a un diamètre de 94 mm.

En pratique, le procédé de fermeture selon l'invention, en ce qui concerne la formation de la surface de scellage, comprend les étapes suivantes :
- mise en compression du couvercle sur le bord du récipient,
- apport d'une quantité d'énergie de scellage prédéterminée, puis,
- suppression de la compression, étapes qui sont réalisées de manière automatique et programmée.

Si l'apport de la quantité d'énergie de scellage dure moins de 0,1 s en général, par contre la mise en compression et la suppression de la compression s'étendent sur un intervalle de temps supérieur à 0,1 s mais inférieur à 1 s et compris généralement entre 0,2 et 0,8 s.

Le choix des matériaux selon l'invention, tant pour le récipient que pour le couvercle, résulte d'une double sélection : sélection des matériaux adaptés à la formation d'emballages compte tenu des contraintes habituelles et des contraintes de recyclabilité des matériaux, et sélection de matériaux soudables par ultrasons.

D'une manière générale, les matériaux issus de cette double sélection appartiennent soit à la famille des matériaux plastiques usuels comme matériaux d'emballage (polyoléfines dont PP, polyester...), soit à la famille des matériaux cellulosiques (carton essentiellement).

Le récipient est constitué par un matériau choisi parmi les matériaux plastiques, les matériaux plastiques multicouches, les matériaux cellulosiques revêtus ou non de matériaux plastiques ou de vernis.
Ainsi, on entend par récipient revêtu intérieurement d'une matière organique polymérique, soit un récipient en matériau homogène, en totalité en matière plastique ou en matière cellulosique, soit un récipient en matériau multicouches, la couche intérieure étant en matériau organique polymérique utilisable pour le scellage par ultrasons.

Le couvercle est aussi constitué par un matériau choisi parmi les matériaux plastiques, les matériaux plastiques multicouches, les matériaux cellulosiques revêtus ou non de matériaux plastiques ou de vernis.
De même, on entend par couvercle revêtu intérieurement d'une matière organique polymérique, soit un couvercle en matériau homogène, en totalité en matière plastique ou en matière cellulosique, soit un couvercle en matériau multicouches, la couche intérieure étant en matériau organique polymérique utilisable pour le scellage par ultrasons.

S'il est préférable que le couvercle et le récipient soient constitués sensiblement d'un même matériau dans une optique de recyclage, cela n'est nullement obligatoire selon l'invention, et, selon le cas, il peut être avantageux d'avoir des matériaux différents.
Ainsi, selon l'invention, il est possible d'avoir un récipient en matière plastique et un couvercle en carton, ou également l'inverse.

Les matériaux plastiques selon l'invention sont choisis de préférence parmi les PP, les copolymères PP-PE, les mélanges PP + PE (HD et BD).

On peut employer des matériaux multicouches, en particulier sans couche métallique, pour obtenir des propriétés particulières, le plus souvent pour améliorer l'étanchéité de l'emballage aux gaz ou à la vapeur d'eau. Les matériaux plastiques multicouches typiques comprennent une couche barrière (EVOH, PVDC, polyamides,...) prise en sandwich entre deux couches polyoléfiniques (PP, copolymère PP-PE,...). Mais l'invention ne se limite pas à ceux-là.

Par matériaux plastiques multicouches, on entend aussi les matériaux comprenant une couche polyoléfinique (PP, copolymère PP-PE,...) revêtue d'une couche adhésive (polyoléfine modifiée par des groupements acides ou esters) qui représente moins de 10 % en poids de l'ensemble "couche polyoléfinique + couche adhésive", de manière à permettre le recyclage du matériau polyoléfinique.

Il est avantageux de munir le couvercle de moyens de préhension facilitant l'ouverture du récipient, et de moyens de fixation du couvercle sur le récipient permettant, après la première ouverture, de réutiliser le couvercle pour fermer le récipient.

Une languette constitue le moyen le plus courant et le plus simple pour faciliter la préhension, l'ouverture du couvercle.

Pour rendre le couvercle réutilisable après la première ouverture, il faut le munir d'un moyen de fixation sur le récipient, de manière amovible.
Pour cela, selon une première modalité, modalité préférée de l'invention, le couvercle est muni d'une gorge permettant le clipsage du couvercle sur le bord du récipient.

Selon une seconde modalité, la fixation est réalisée à l'aide de moyens "chimiques", typiquement par une couche adhésive.

### EXEMPLE

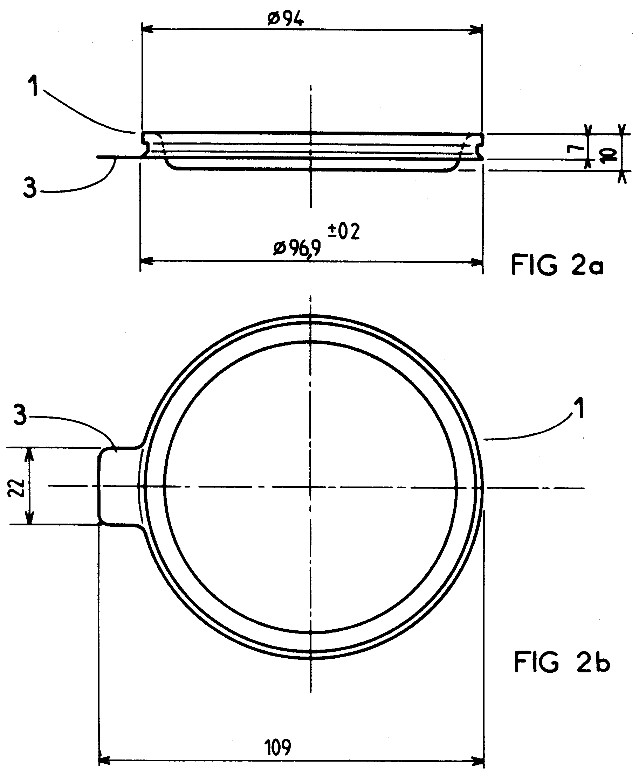

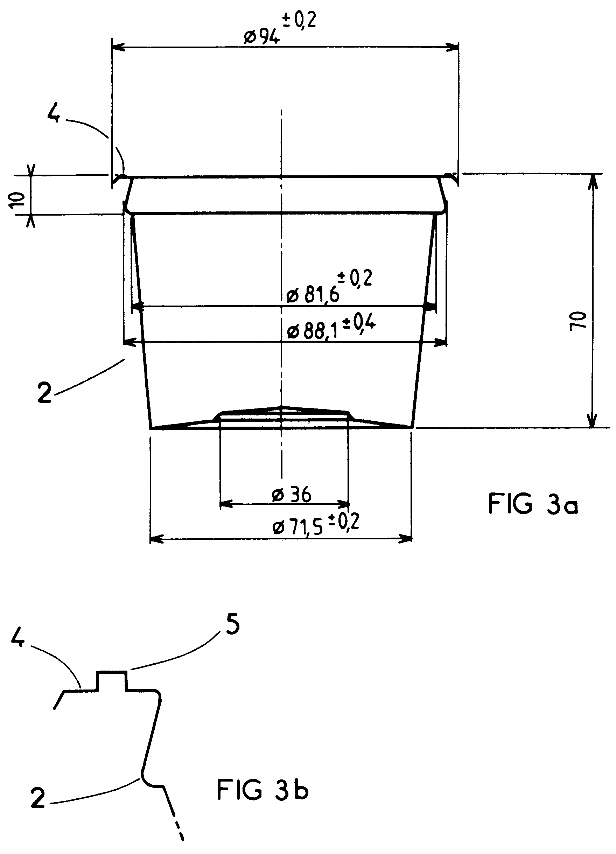

Par thermoformage de bande PP de 0,4 mm d'épaisseur, on a fabriqué un ensemble couvercle (1) et récipient (2) selon les plans des figures 2a et 2b pour le couvercle et des figures 3a et 3b pour le récipient. Ces couvercles et récipients ont servi à réaliser tous les essais de scellage.
Chaque récipient comporte un cordon de scellage (5) de 2 cm² d'aire.

Les essais de scellage ont été réalisés à l'aide d'un dispositif fabriqué par BRANSON ULTRASONS (Modèle 921 AES).

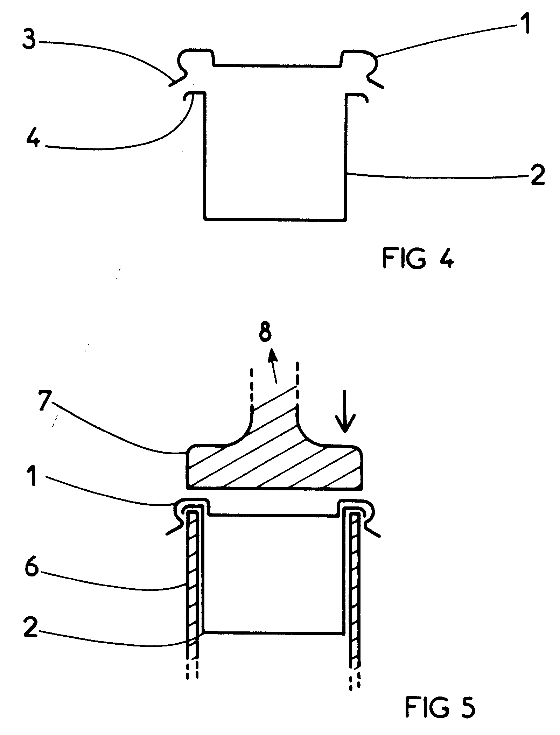

La puissance maximale fournie à la sonotrode (7), servant de mors supérieur comme schématisé à la figure 5, est de 2000 W. Ce modèle comporte un intégrateur d'énergie dissipée et des moyens permettant de contrôler la déplacement et / ou la pression de la sonotrode (7).
Le mot "sonotrode" désigne la partie du dispositif en contact avec le matériau à sceller et transmettant l'énergie ultrasonore fournie par le générateur à ultrasons.

Durant tous les essais de scellage, la force de compression entre la sonotrode métallique (7) et le mors inférieur (6) a été maintenue constante à 160 N pendant 0,8 s.

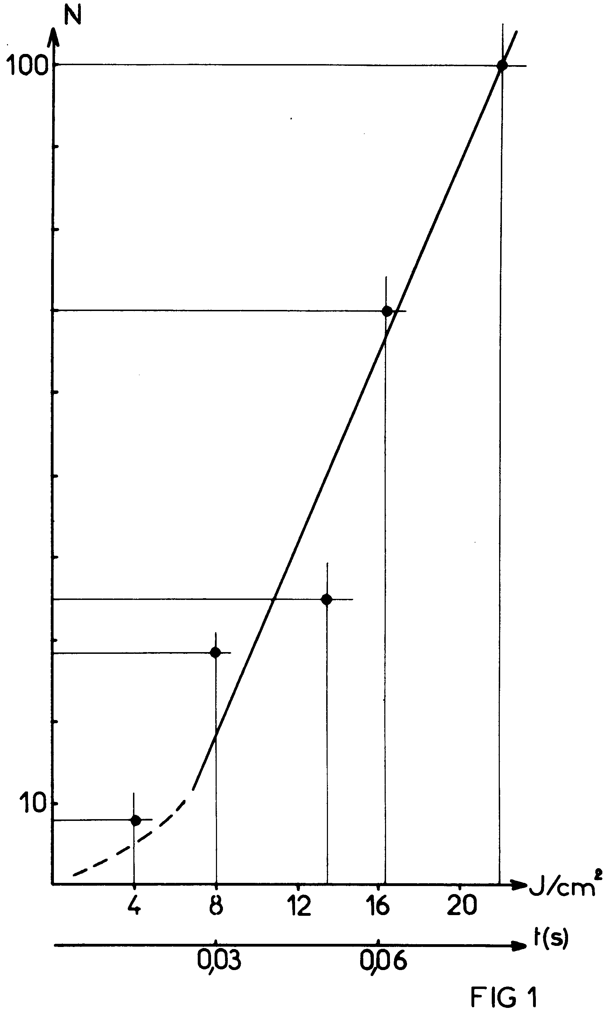

Au cours d'une série d'essais exploratoires, afin d'établir la relation entre l'effort d'ouverture et l'énergie dissipée / ou la durée d'activation de la sonotrode, on a fait varier l'energie dissipée par la sonotrode en faisant varier le temps pendant lequel la sonotrode est active, temps situé dans une plage comprise entre 0,01 et 0,08 s. Pour chaque temps, l'énergie dissipée a été notée. Les résultats obtenus sont représentés à la figure 1. Ils montrent qu'avec une énergie dissipée de l'ordre de 10 J/cm², on obtient un effort d'ouverture de l'ordre de 30 N, ce qui correspond à une valeur habituelle admise pour ouvrir ce type de récipient.

On a réalisé des essais de reproductibilité en pilotant la durée d'activation de la sonotrode par la quantité d'énergie dissipée. Dans ces essais, on a fixé le seuil d'énergie dissipée à 20 J pour une aire de scellage de 2 cm² (soit 10 J/cm²). On a observé une très grande régularité des résultats obtenus (efforts d'ouverture) puisqu'on a obtenu, sur 20 essais, un effort d'ouverture moyen de 31 N +/- 2 N. Il semble que le pilotage de la sonotrode seulement par le temps d'activation de la sonotrode conduise à une dispersion des résultats satisfaisante quoique légèrement supérieure à la précédente.

Les emballages ainsi obtenus ont été testés sur le plan de l'ouverture et de la fermeture, après l'ouverture initiale. Après 30 cycles d'ouverture / fermeture, on n'a pas observé de changement de l'emballage (pas de déchirure de languette de préhension), ni de variation notable des efforts d'ouverture et de fermeture.

### AVANTAGES DE L'INVENTION

L'invention permet de résoudre le problème posé et d'atteindre l'ensemble des objectifs déjà mentionnés.

Bien que cela n'apparaisse pas sur la figure 5, le dispositif utilisé pour mettre en oeuvre le procédé de l'invention comprend des moyens pour automatiser les transferts de couvercles, récipients pleins et récipients pleins fermés, ce qui assure un conditionnement à très haute cadence, au moins égal à 1 unité conditionnée / s.

Un autre avantage non mentionné jusqu'à présent réside dans le fait que le scellage par ultrasons ne conduit pas à un réchauffement notable des bords scellés, ce qui peut être avantageux, par exemple dans le cas où le contenu du récipient est thermo-sensible.

## Revendications

1. Procédé de fermeture d'un récipient non métallique avec un couvercle non métallique, dans lequel on forme une surface de scellage étanche en comprimant, entre deux mors dont au moins un est muni d'un moyen de scellage comprenant un générateur d'ultrasons, le couvercle revêtu intérieurement d'une première matière organique polymérique, sur le bord du récipient revêtu intérieurement d'une seconde matière organique polymérique, et caractérisé en ce que, a) le scellage de ladite première et de ladite seconde matière organique est obtenu en contrôlant l'énergie dissipée sur la surface de scellage par apport d'une quantité d'énergie modulable et prédéterminée, b) ledit apport d'énergie est proportionnel à l'aire de la surface de scellage, et compris entre 1 et 20 J/cm² de surface de scellage, de manière à obtenir un couvercle, pelable avec un effort d'ouverture reproductible et prédéterminé, et réutilisable.

2. Procédé selon la revendication 1 dans lequel, de manière à obtenir un effort d'ouverture compris entre 10 et 30 N, l'apport d'énergie / cm² est de préférence compris entre 5 et 15 J/cm².

3. Procédé selon une quelconque des revendications 1 à 2 dans lequel on comprime le couvercle sur le bord du récipient en appliquant aux deux mors une force de compression prédéterminée comprise entre 20 et 500 N, et/ou en rapprochant les deux mors de manière à obtenir une distance entre mors prédéterminée, comprise entre 0,1 et 0,6 mm selon l'épaisseur du couvercle et du bord du récipient.

4. Procédé selon la revendication 3 dans lequel la formation de la surface de scellage comprend les étapes suivantes :
- mise en compression du couvercle sur le bord du récipient,
- apport de la quantité d'énergie prédéterminée, puis,
- suppression de la compression, étapes qui sont réalisées de manière automatique et programmée.

5. Procédé selon la revendication 4 dans lequel la durée de l'apport d'énergie est inférieur à 0,1 s et l'intervalle de temps entre la mise en compression et la suppression de la compression est inférieur à 1 s.

6. Procédé selon une quelconque des revendications 1 à 5 dans lequel le récipient est constitué par un matériau choisi parmi les matériaux plastiques, les matériaux plastiques multicouches, les matériaux cellulosiques revêtus ou non de matériaux plastiques ou de vernis.

7. Procédé selon une quelconque des revendications 1 à 6 dans lequel le couvercle est constitué par un matériau choisi parmi les matériaux plastiques, les matériaux plastiques multicouches, les matériaux cellulosiques revêtus ou non de matériaux plastiques ou de vernis.

8. Procédé selon une quelconque des revendications 6 et 7 dans lequel les matériaux plastiques sont choisis de préférence parmi les PP, les copolymères PP-PE, les mélanges PP + PE (HD et BD).

9. Procédé selon une quelconque des revendications 6 et 7 dans lequel les matériaux plastiques multicouches comprennent une couche barrière (EVOH, PVDC,...) prise en sandwich entre deux couches polyoléfiniques (PP, copolymère PP-PE,...).

10. Procédé selon une quelconque des revendications 6 et 7 dans lequel les matériaux plastiques multicouches comprennent une couche polyoléfinique (PP, copolymère PP-PE,...) revêtue d'une couche adhésive (polyoléfine modifiée par des groupements acides ou esters) qui représente moins de 10 % en poids de l'ensemble "couche polyoléfinique + couche adhésive".

11. Procédé selon une quelconque des revendications 1 à 10 dans lequel le couvercle est muni de moyens de préhension facilitant l'ouverture du récipient, et de moyens de fixation du couvercle sur le récipient permettant, après la première ouverture, de réutiliser le couvercle pour fermer le récipient.

12. Procédé selon la revendication 11 dans lequel le couvercle est muni d'une languette comme moyen de préhension et, comme moyen de fixation du couvercle, d'une gorge permettant le clipsage du couvercle sur le bord du récipient.

13. Procédé selon la revendication 11 dans lequel le moyen de fixation du couvercle est une couche adhésive.

## Claims

1. Method for sealing a non-metallic container with a non-metallic cover, in which a liquid-tight sealing surface is formed by compressing between two jaws, one of which is fitted with a sealing means comprising an ultrasound generator, the cover which is internally coated with a first organic polymer material onto the edge of the container coated internally with a second organic polymer material, and characterised in that a) the sealing of said first and said second organic material is produced by controlling the energy dissipated over the sealing surface by supplying a variable and pre-determined quantity of energy, b) said supply of energy is proportional to the area of the sealing surface and between 1 and 20 J/cm² of sealing surface, such as to produce a cover peelable by means of a reproducible and predetermined opening effort, and re-useable.

2. Method according to claim 1 in which, in order to obtain an opening effort of between 10 and 30 N, the supply of energy/cm² is preferably between 5 and 15 J/cm².

3. Method according to any one of claims 1 to 2, in which the cover is compressed onto the edge of the container by applying a pre-determined compression force of between 20 and 500 N to the two jaws, and/or by bringing the two jaws together such as to produce a pre-determined distance between the jaws of between 0.1 and 0.6 mm, according to the thickness of the cover and of the edge of the container.

4. Method according to claim 3, in which the formation of the sealing surface comprises the following steps:
- compressing of the cover onto the edge of the container,
- supply of the predetermined quantity of sealing energy, then,
- termination of the compressing,
which steps are carried out in an automatic and programmed manner.

5. Method according to claim 4, in which the duration of the supply of energy is less than 0.1 s and the time interval between the compressing and termination of the compressing is less than 1 s.

6. Method according to any one of claims 1 to 5 in which the container is made from a material selected from plastics materials, multi-layer plastics materials or cellulose materials coated or not with plastics materials or with varnish.

7. Method according to any one of claims 1 to 6, in which the cover is made from a material selected from plastics materials, multi-layer plastics materials and cellulose materials coated or not with plastics materials or with varnish.

8. Method according to any one of claims 6 and 7, in which the plastics materials are preferably selected from PPs, PP-PE copolymers and mixtures of PP-PE (HD and BD).

9. Method according to any one of claims 6 and 7, in which the multi-layer plastics materials comprise a barrier layer (EVOH, PVDC and so on) sandwiched between two polyolefin layers (PP, PP-PE copolymers and so on).

10. Method according to any one of claims 6 and 7, in which the multi-layer plastics materials comprise a polyolefin layer (PP, PP-PE copolymers and so on) covered with an adhesive layer (polyolefin modified by acid or ester groups) which represents less than 10% by weight of the "polyolefin layer + adhesive layer" combination.

11. Method according to any one of claims 1 to 10, in which the cover is provided with gripping means facilitating the opening of the container, and with means for fixing the cover to the container allowing the cover to be re-used to seal the container after initial opening.

12. Method according to claim 11, in which the cover is provided with a tongue as a gripping means and with a groove allowing clipping of the cover onto the edge of the container as a means for fixing the cover.

13. Method according to claim 11, in which the cover fixing means is an adhesive layer.

## Patentansprüche

1. Verfahren zum Verschließen eines nicht-metallischen Behälters mit einem nicht-metallischen Deckel, wobei man eine dichte Versiegelungsfläche bildet, indem man zwischen zwei Backen, von denen mindestens eine mit einer Versiegelungseinrichtung versehen ist, die einen Ultraschallgenerator aufweist, den innen mit einem ersten organischen Polymermaterial verkleideten Deckel auf den Rand des Behälters aufpreßt, der innen mit einem zweiten organischen Polymermaterial ausgekleidet ist, und das dadurch **gekennzeichnet** ist, daß
a) die Versiegelung des genannten ersten und zweiten organischen Materials dadurch erreicht wird, daß man die Energie, die der Versiegelungsfläche zugeführt wird, durch Zufuhr einer modulierbaren und vorbestimmten Energiemenge steuert, und
b) die genannte Energiezufuhr proportional ist zur Oberfläche der Siegelfläche und zwischen 1 und 20 J pro cm² der Siegelflache liegt, derart, daß man einen mit einer reproduzierbaren und vorbestimmten Öffnungskraft abziehbaren und wiederbenutzbaren Deckel erhält.

2. Verfahren nach Anspruch 1, worin zum Erhalten einer Öffnungskraft, die zwischen 10 und 30 N liegt, die Energiezufuhr pro cm² bevorzugt zwischen 5 und 15 J/cm² liegt.

3. Verfahren nach irgendeinem der Ansprüche 1 bis 2, worin man den Deckel auf den Rand des Behälters dadurch niederdruckt, daß man auf mindestens zwei Backen eine vorbestimmte Kompressionskraft aufbringt, die zwischen 20 und 500 N liegt, und/oder daß man die beiden Backen derart zusammendrückt, daß man zwischen den Backen einen vorbestimmten Abstand erhalt, der entsprechend der Dicke des Deckels und des Randes des Behälters zwischen 0,1 und 0,6 mm liegt.

4. Verfahren nach Anspruch 3, worin die Bildung der Versiegelungsfläche zwei aufeinanderfolgende Schritte aufweist:
- Aufdrucken des Deckels auf den Rand des Behälters,
- Zufuhren der vorbestimmten Energiemenge, und dann
- Aufheben des Drucks,
Schritte, die automatisch und programmiert durchgeführt werden.

5. Verfahren nach Anspruch 4, worin die Dauer der Energiezufuhr kleiner ist als 0,1 s und der Zeitintervall zwischen dem Aufdrucken und dem Aufheben des Druckes kleiner ist als 1 s.

6. Verfahren nach irgendeinem der Ansprüche 1 bis 5, worin der Behälter aus einem Material gebildet ist, das ausgewählt ist aus den Kunststoffen, den mehrlagigen Kunststoffen bzw. den Zellulosematerialien, die mit Kunststoffen oder Lack überzogen sind oder nicht.

7. Verfahren nach irgendeinem der Ansprüche 1 bis 6, worin der Deckel aus einem Material gebildet ist, das ausgewählt ist aus den Kunststoffen, den mehrlagigen Kunststoffen bzw. den Zellulosematerialien, die mit Kunststoffen oder Lack überzogen sind oder nicht.

8. Verfahren nach irgendeinem der Ansprüche 6 und 7, worin die Kunststoffe bevorzugt unter den PP, den Copolymeren PP-PE und den Gemischen PP+PE (hohe und niedere Dichte) gewählt sind.

9. Verfahren nach irgendeinem der Ansprüche 6 und 7, worin die mehrschichtigen Kunststoffe eine Sperrschicht (EVOH, PVDC ...) aufweisen, die sandwichartig zwischen zwei polyolefinartigen Schichten (PP, Copolymer PP-PE, ...) eingeschlossen ist.

10. Verfahren nach irgendeinem der Ansprüche 6 und 7, worin die mehrschichtigen Kunststoffe eine Polyolefinschicht (PP, Copolymer PP-PE, ...) aufweisen, die mit einer Klebschicht (Polyolefin, modifiziert durch saure Gruppierungen oder Ester) verkleidet ist, die mindestens 10 Gew.-% der Gesamtheit "Polyolefinlage und Kleberlage" darstellt.

11. Verfahren nach irgendeinem der Ansprüche 1 bis 10, worin der Deckel mit Mitteln zum Ergreifen ausgestattet ist, die das Öffnen des Behälters erleichtern, und mit Mitteln der Befestigung des Deckels auf dem Behälter, die es gestatten, nach dem ersten Öffnen den Deckel zum Schließen des Behälters wiederzubenutzen.

12. Verfahren nach Anspruch 11, worin der Deckel mit einer Zunge als Mittel zum Ergreifen ausgestattet ist, und als Mittel zur Befestigung des Deckels mit einer Auskehlung, die das Einrasten des Deckels auf dem Rand des Behälters gestattet.

13. Verfahren nach Anspruch 11, worin das Befestigungsmittel des Deckels eine Klebstoffschicht ist.
